Europäisches Patentamt

European Patent Office

Office européen des brevets

(11) Veröffentlichungsnummer: **0 394 811**
**A2**

# EUROPÄISCHE PATENTANMELDUNG

(21) Anmeldenummer: 90107282.7

(22) Anmeldetag: 17.04.90

(51) Int. Cl.5: **H04M 1/26, H01Q 11/04, H04M 11/06**

(30) Priorität: 27.04.89 DE 3914002

(43) Veröffentlichungstag der Anmeldung:
**31.10.90 Patentblatt 90/44**

(84) Benannte Vertragsstaaten:
**AT BE CH DE ES FR GB IT LI NL**

(71) Anmelder: **Siemens Aktiengesellschaft**
**Wittelsbacherplatz 2**
**D-8000 München 2(DE)**

(72) Erfinder: **Düsing, Sven, Dipl.-Ing. (FH)**
**Pommernstrasse 3a**
**D-8022 Grünwald(DE)**
Erfinder: **Wohlsecker, Wilhelm, Dipl. (FH)**
**Bert-Brecht Alle 5**
**D-8000 München 83(DE)**

(54) Verfahren für einen EDV-unterstüzten Kommunikationsverbindungsaufbau.

(57) Die Erfindung betrifft ein Verfahren für einen EDV-unterstützten Kommunikationsverbindungsaufbau innerhalb eines Rechnersystems mit einer Vielzahl von Terminals und einem Rechner.

EP 0 394 811 A2

## Verfahren für einen EDV-unterstützten Kommunikationsverbindungsaufbau

Die Erfindung betrifft ein Verfahren für einen EDV-unterstützten Kommunikationsverbindungsaufbau innerhalb eines Rechnersystems mit einer Vielzahl von Terminals und einem zentralen Rechner.

In der heutigen Zeit werden in zunehmendem Maße mehrere Terminals, die z.B. durch Personal-Computer realisiert sind, mit einem zentralen Rechner vernetzt. Dabei bilden im Allgemeinen jeweils ein zentraler Rechner und eine Vielzahl von Terminals ein Rechnersystem zur Bearbeitung eines bestimmten Aufgabengebietes. So werden z.B. im zentralen Rechner Stammdaten, welche auch die Telefonnummern der Geschäftspartner, wie Lieferanten und Kunden, enthalten, zentral geführt und gepflegt. Die zuständigen Sachbearbeiter erhalten damit zu den Daten der Geschäftspartner auch deren Telefonnummern auf einem Monitor angezeigt. Will der Sachbearbeiter dann aus der EDV-Anwendung heraus ein Telefongespräch mit seinem Geschäftspartner führen, so muß er die Telefonnummer, die am Monitor angezeigt wird, noch einmal manuell am Telefonapparat eingeben. Nachteilig bei diesem Ablauf sind der Zeitaufwand bei der manuellen Übernahme der externen Telefonnummer für ein Telefonat sowie eventuelle Eingabefehler bei der manuellen Eingabe extrem langer Rufnummern.

Aufgabe der vorliegenden Erfindung ist es ein Verfahren der eingangs genannten Art anzugeben, welches es ermöglicht die am Monitor angezeigte Rufnummer direkt zur Herstellung einer Verbindung zu benutzen.

Diese Aufgabe wird erfindungsgemäß für ein Verfahren der eingangsgenannten Art dadurch gelöst, daß über ein Terminal auf im zentralen Rechner abgespeicherte Stammdaten einschließlich Ruf nummern von externen Partnern zugegriffen wird, um diese über eine Bildschirmmaske anzuzeigen, und daß über einen Auslösebefehl Wählinformationen einer auf dem Bildschirm besonders gekennzeichneten Rufnummer über eine Schnittstelle an eine Kommunikationsanlage zwecks Verbindungsaufbau übertragen wird.

Bei dem erfindungsgemäßen Verfahren wird dem Sachbearbeiter das zusätzliche manuelle Übernehmen und Eingeben einer externen Telefonnummer aus dem Datenbestand abgenommen. Darüberhinaus hat die erfindungsgemäße Lösung der Selektion der Rufnummern über den Monitor den großen Vorteil, daß bei den einzelnen EDV-Programmen keine Programmroutinen zusätzlich eingefügt werden müssen. Der Sachbearbeiter kann zu jeder Bildschirmmaske, die eine gekennzeichnete Telefonnummer enthält, die automatische Telefonverbindung über eine Funktionstaste auslösen.

Eine zweckmäßige Ausgestaltung des erfindungsgemäßen Verfahrens ist dadurch gekennzeichnet, daß die Rufnummer am Monitor durch vor- und nachgestellte Sonderzeichen gekennzeichnet sind und mittels einer Funktionstaste selektiert werden können. Diese Lösung bietet einen hohen Nutzungskomfort und ist besonders dort geeignet, wo die Texte bzw. Daten speziell für diesen Zweck erstellt sind.

Eine andere zweckmäßige Ausgestaltung des erfindungsgemäßen Verfahren ist dadurch gekennzeichnet, daß die zum Verbindungsaufbau gewünschten Rufnummern mittels eines Cursors gekennzeichnet werden. Diese Ausgestaltung ist besonders dann von Vorteil, wenn die Rufnummern in beliebigen Texten enthalten sein können.

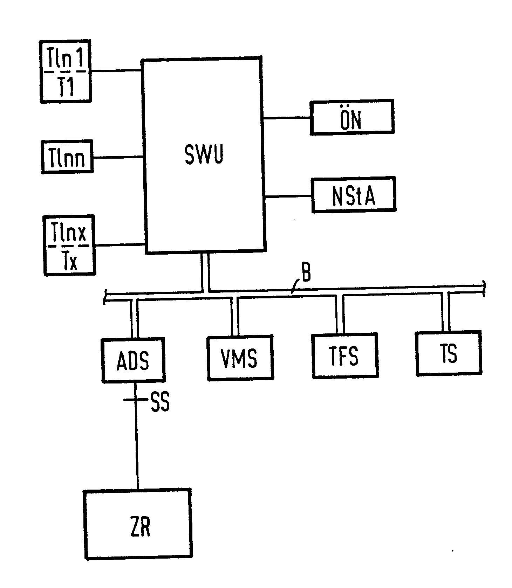

Im folgenden wird ein Ausführungsbeispiel der Erfindung anhand der Zeichnung näher erläutert.

In der Zeichnung ist ein Rechnersystem, bestehend aus einem zentralen Rechner ZR und einer Vielzahl von Terminals TI bis Tx in Verbindung mit einem ISDN-Kommunikationssystem dargestellt.

Bei dem dargestellten Rechnersystem erfolgt die Verbindung der Terminals T untereinander so wie der Terminals T mit dem zentralen Rechner ZR über ein ISDN-Kommunikationssystem. In der Figur ist der prinzipielle Aufbau eines programmgesteuerten modular aufgebauten Kommunikationssystems dargestellt. Ein wesentlicher Bestandteil des dargestellten ISDN-Kommunikationssystems ist ein ein digitales Koppelnetz und eine zentrale Steuerungseinrichtung aufweisendes Durchschaltemodul SWU, an welches neben dem öffentlichen Fernsprechnetz ÖN und privaten Fernsprechnetzen NStA einzelne Teilnehmerstationen TlnI bis Tlx angeschlossen sind. Das Durchschaltemodul SWU ist über ein Bussystem B mit einem Betriebs- und Datenmodul ADS verbunden, welches der Steuerung der systemtechnischen Peripherie sowie der Speicherung von Systemdateien dient. Weiterhin ist an das Bussystem B ein Sprachinformationsmodul VMS und ein Text- und Faxmodul TFF angeschlossen, deren genaue Funktionen im Zusammenhang mit der vorliegenden Erfindung aber nicht interessant sind. Ferner ist noch ein Terminalserver TS, der zur Unterstüzung der Terminals TI bis Tx dient, vorhanden. Hierbei kann es sich z.B. um Terminals der Art HICOM 3510 handeln, wie sie in der Ausgabe "ISDN im Büro-HICOM", Sonderausgabe Telecom-Report und Siemens Magazin COM derFirma Siemens AG, beschrieben sind.

Die einzelnen Module des Kommunikationssystems bestehen jeweils aus peripheren und zentralen Baugruppen, die zum Teil über eigene Mikroprozessoren verfügen. Der Aufbau und die Aufgaben der einzelnen Baugruppen ist ebenfalls zum Verständnis der vorliegenden Erfindung nicht wesentlich und wird daher im Rahmen der Beschreibung auch nicht näher erläutert. Für Module, welche wie das Betriebs- und Datenmodul ADS mittels idividueller Programmsteuerung jeweils spezifische Aufgaben erfüllen, hat sich auch der Begriff "Server" durchgesetzt. So dient im dargestellten Beispiel der Sprachinformationsserver VMS dazu, Nachrichten in einen dem Empfänger zugeordneten Postfach des Servers zu hinterlegen, wobei der Empfänger die Nachrichten von einem beliebigen geeigneten Terminal jederzeit abrufen kann. Der Text-und Faxserver TFF ermöglicht den Nachrichtenaustausch zwischen Endgeräten, die technisch nicht komperibel sind.

Im dargestellten Ausführungsbeispiel ist der Betriebs- und Datenserver ADS über die Schnittstelle SS mit einem zentralen Rechner ZR verbunden, auf den die Terminal Tl bis Tx Zugriff haben. Die Verbindung der Terminals, die durch Personal-Computer realisiert sind, mit dem zentralen Rechner ZR sowie untereinander erfolgt über das beschriebene ISDN-Kommunikationssystem. Jedem Terminal Tl bis Tx ist ein Endgerät des Kommunikationssystems zugeordnet.

Fordert nun der zuständige Sachbearbeiter Stammdaten eines Geschäftspartners an, so werden diese mit den zugehörigen Rufnummern auf dem Monitor dargestellt. Eine Möglichkeit besteht darin, daß am Monitor zusammen mit den EDV-Daten des Geschäftspartners die Telefonnummer innerhalb einer spitzen Klammer dargestellt wird. Will der Sachbearbeiter nun mit einem Geschäftspartner telefonieren, so drückt er eine hierfür bestimmte Funktionstaste. Hierauf wird die Bildschirmmaske mittels einer Programmroutine des Monitors durchsucht und die erste gefundene Telefonnumer in spitzer Klammer optisch hervorgehoben. Sind in der Darstellung meherere Telefonnummern einer Bildschirmmaske enthalten, so kann der Sachbearbeiter über die Funktionstasten die Fortsetzung der Selektion veranlassen und die nächste Telefonnummer wird in der gleichen Weise markiert. Mit Betätigung der Eingabetaste wird dann die zuletzt selektierte Rufnummer an die Kommunikationsanlage weitergegeben und damit automatisch aus der EDV-Anwendung die Kommunikationsverbindung zum Geschäftspartner aufgebaut.

Eine andere Möglichkeit die Rufnummern zu kennzeichnen, besteht z.B. darin, jeweils das erste Zeichen der gewünschten Rufnummer mittels eines Cursors zu kennzeichnen und anschließend die Wählfunktion zu aktivieren. Dabei kann der Cursor manuell oder durch die vorgegebene Anwendung auf das erste Zeichen gesetzt werden. In diesem Zusammenhang soll darauf hingewiesen werden das die Nutzung der Wählinformation für alle Kommunikationsar ten möglich ist, die am Endgerät zur Verfügung stehen.

Es ist von Vorteil, wenn aus der Funktionsebene Datenverarbeitung ein direkter Kommunikationsverbindungsaufbau über eine Funktionstaste möglich ist, wenn die Rufnummer mit Sonderzeichen versehen ist, damit der Benutzer nach dem Empfang der Bildschirmmaske direkt die Kommunikationsverbindung anstoßen kann. Diese Möglichkeit ist auch direkt aus der Funktionsebene Textbearbeitung möglich, wenn für Gespräche ohne EDV-Zugriff manuelle Telefonnummer und Stichpunkte erfaßt werden sollen.

Es kann zusätzlich vorgesehen werden, bei erfolglosen Kommunikationsverbindungen die Bildschirmmaske mit den abgerufenen Stammdaten und mit gegebenenfalls zustätzlichen Anmerkungen abzuspeichern und mit einem Stichwort in einer Liste für "offene Kommunikationsverbindungen" abzuspeichern, um bei Gelegenheit darauf zurückzugreifen.

## Ansprüche

1. Verfahren für einen EDV-unterstützten Kommunikationsverbindungsaufbau innerhalb eines Rechnersystems mit einer Vielzahl von Terminals und einem zentralen Rechner,
**dadurch gekennzeichnet,**
daß über ein Terminal (z.B. Tl) auf im zentralen Rechner (ZR) abgespeicherte Stammdaten einschließlich Rufnummern von externen Partnern zugegriffen wird, um diese über eine Bildschirmmaske anzuzeigen, und daß über einen Auslösebefehl die Wählinformation einer auf dem Bildschirm besonders gekennzeichneten Rufnummer über eine Schnittstelle an eine Kommunikationsanlage zwecks Verbindungsaufbau übertragen wird.

2. Verfahren nach Anspruch 1,
**dadurch gekennzeichnet,**
daß die Rufnummern am Monitor durch vor- und nachgestellte Sonderzeichen gekennzeichnet sind und mittels einer Funktionstaste selektiert werden können.

3. Verfahren nach Anspruch 1,
**dadurch gekennzeichnet,**
daß die zum Verbindungsaufbau gewünschten Rufnummern mittels eines Cursors gekennzeichnet werden.